# EUROPEAN PATENT SPECIFICATION

(11) **EP 0 317 370 B1**
(45) Date of publication and mention of the grant of the patent: **01.06.1994**
(21) Application number: 88311000.9
(22) Date of filing: 21.11.1988
(51) Int. Cl.: G11B 15/675

(54) **Cassette loading apparatus for digital audio tape recorder**
Kassettenladegerät für Digital-Audio-Bandaufzeichnungsgerät
Appareil de chargement de bande pour enregistreur à bande digitale audio

(30) Priority: 20.11.1987 KR 2010787; 31.12.1987 KR 2457487; 29.04.1988 KR 619888; 29.04.1988 KR 619988
(43) Date of publication of application: 24.05.1989
(73) Proprietor: GOLDSTAR CO. LTD., Seoul (KR)
(72) Inventor: Chung, Seok Pyo, Kyungki-Do (KR); Lim, Byung Cheol, Kyungki-Do (KR); Yoo, Seung Heon, Seoul (KR)
(74) Representative: Palmer, Roger

(56) References cited:
- EP-A- 0 129 185
- EP-A- 0 150 128
- EP-A- 0 192 448
- EP-A- 0 219 041
- DE-A- 2 046 273
- GB-A- 2 020 081
- US-A- 4 423 445

## Description

The present invention relates to a cassette loading apparatus for digital audio tape recorder (DAT), and specifically relates to a cassette front loading apparatus for a DAT with tray type loading by moving a cassette horizontally and vertically.

By way of background, reference is made firstly to EP-A-150128 and EP-A-219041. These documents both describe video tape recorders of which the basic structure is different from cassette holders for digital audio tape recorders of the type with which the present invention is concerned.

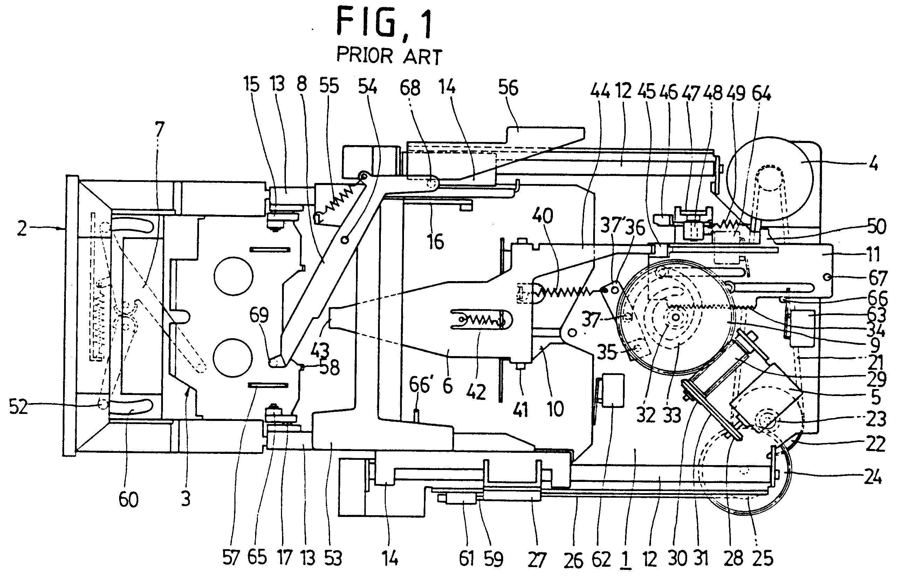

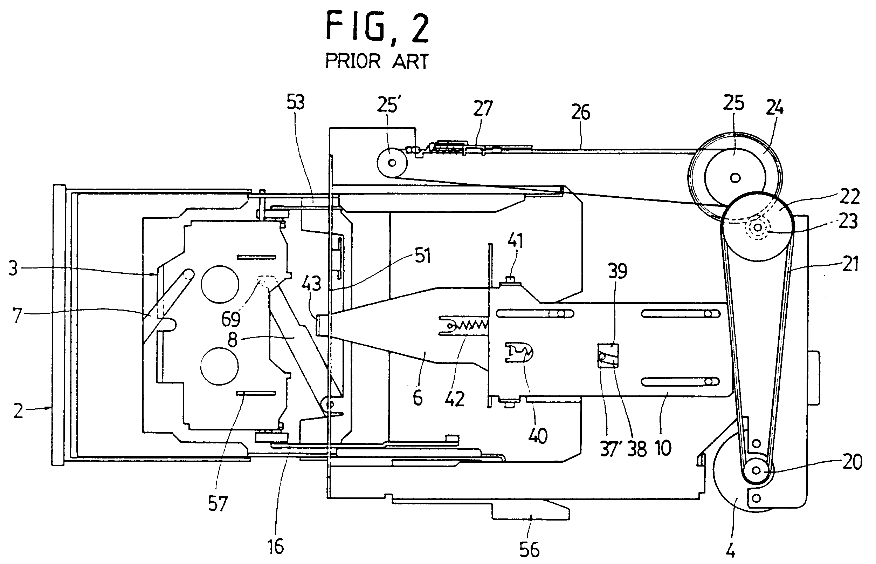

A conventional DAT is formed such that a tape cassette contained with an audio tape is positioned on reel tables within an interior of the apparatus, a tape is drawn out of a cassette and applied to a rotary head drum, thereafter a tape is driven to run by a driving force of a capstan motor, whereby record and reproduction of the tape can be executed. In such a DAT, a practical form of a conventional cassette front loading apparatus for moving a tape cassette from the exterior to the interior of an apparatus will be explained in detail in accordance with FIGs. 1 to 3 as follows.

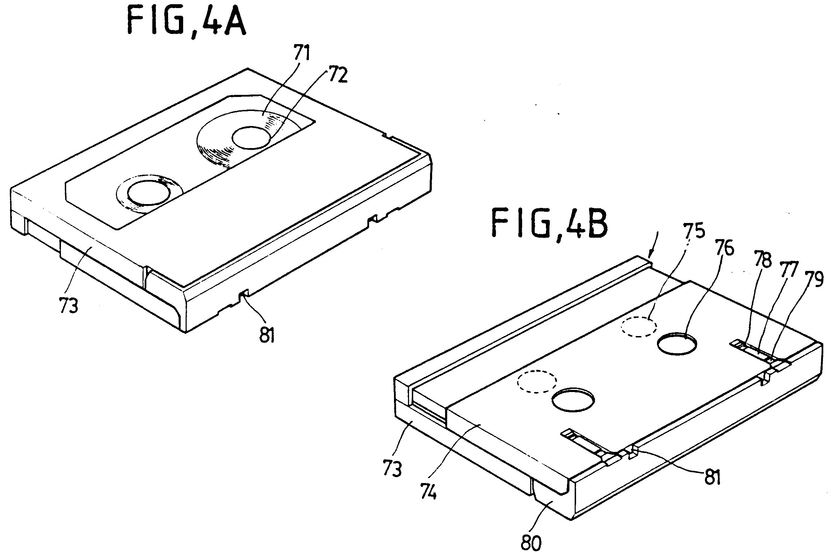

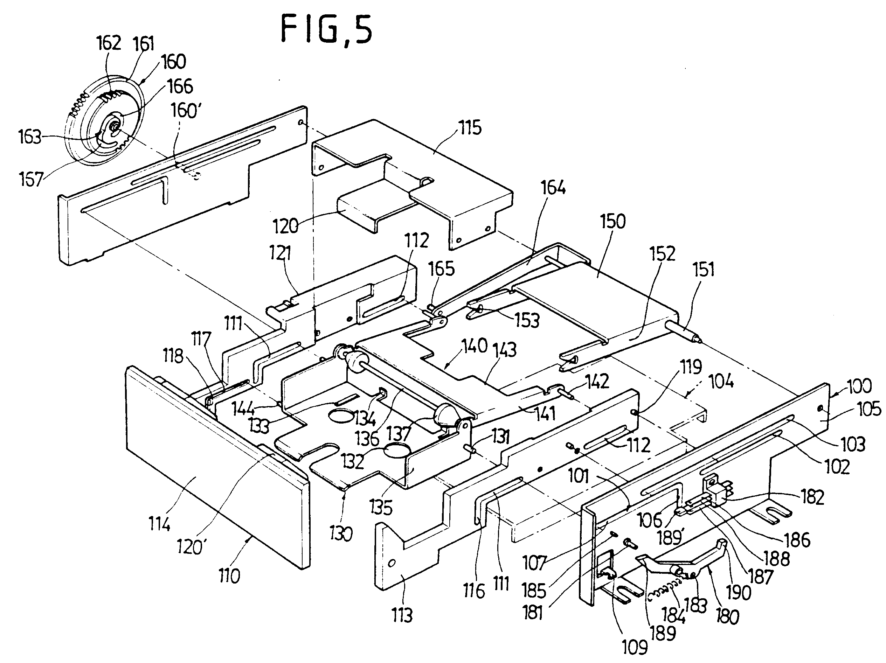

In the drawings, the reference numeral 1 is a base plate, 2 is a cassette tray moving reciprocally and linearly against the base plate 1, 3 is a cassette holder which carries a DAT cassette 70 (refer to FIGs. 4 and 5) and which moves with the tray 2, 4 is a loading motor for loading the cassette tray 2 and the cassette holder 3, 5 is a cassette lift and drop motor which moves downwardly as much as a predetermined length successively from the state that the cassette holder 3 has finished the horizontal movement, 6 is a slider opening plate which opens a slider 74 of a cassette 70, 7 is a push lever which properly and safely sets said cassette 70 into the cassette holder 3 in case of loading a cassette 70, 8 is a take out lever which takes out said cassette 70 from the cassette holder 3 in case of loading a cassette 70, 9 is a driving gear which transfer the driving force of the cassette lift and drop motor 5, 10 is an opening operation plate which actuates the slider opening plate 6 by being coupled with said driving gear 9, and 11 represents a lift and drop operation plate which drops the cassette holder and the cassette 70 by being coupled with said driving gear 9, respectively.

To said base plate 1 are fixed tightly with guide bars 12 at the side edge portion, to both side plates 13 of said cassette tray 2 are arranged with linear bearings 14 which the guide bars 12 are inserted so that a cassette tray 2 moves linearly riding along the guide bars 12.

To the side plates 15 of said cassette holder 3 are movably connected respectively with the rotation levers 16 by connecting pieces 17 and each rotation levers are rotatably fixed at the both side plate 13 of the cassette tray 2 by axial pins 18, to the axial pins 18 there are fixed with torsion springs 19 supporting resiliently the rotation levers 16 in clockwise.

Aforesaid loading motor 4 is fixed to the base plate 1, at the bottom of the base plate 1 there are fixed with a pulley 22 which is connected to a pulley 21 with a pulley 20 fixed to a shaft of the loading motor 4, a gear 24 connected to a gear 23 formed integrally therewith, a pulley 25' connected. by a wire 26 to a pulley 25 formed integrally therewith, and said wire 26 is connected with connecting pieces 27 fixed to said cassette tray 2. Therefore, the cassette tray 2, cassette holder 3,rotation lever 16 and take out lever 8 can be moved together linearly.

Aforesaid lift and drop motor 5, to which shaft a pulley 28 is fixed, is connected to a pulley 30 formed integrally with a worm 29 by a belt 31, and the worm 29 is meshed with the driving gear 9. At the lower surface of the driving gear 9, a small gear having a cam groove 33 at the peripheral surface thereof is integrally formed and is meshed with a rack 34 formed at a side edge portion of said lift and drop operation plate 11. At the lower portion of the driving gear 9, a cam lever 36 is rotatably mounted with a shaft pin 35 and a cam pin 37 provided on the upper surface of the cam lever 36 is inserted into the cam groove 33 of the driving gear 9 and, at the same time, another cam pin 37′ is inserted into a rectangular guide hole 39 of said opening operation plate 10 through a pierced hole 38 formed at the base plate 1, and the cam lever 36 and the opening operation plate 10 are connected by a tension spring 40.

To said opening operation plate 10 is connected with said slider opening plate 6 by a shaft 41, said slider opening plate 6 and the opening operation plate 10 are connected with a tension spring 42. And the slider opening plate 6 is formed with a cassette hooking piece 43 at a front end portion and a contacting piece 44 is formed at rear portion, thereby the contacting piece 44 is allowed to couple with contacting to a 2-stage cam step portion 45 having an inclined plane of said lift and drop operation plate 11.

At a side of the lift and drop operation plate 11 of said base plate 1 there is fixed with a rotation relay lever 46 by a shaft 48 at a supporting piece 47 protruded from the base plate 1, at the same time it is urged by a tension spring 49, in case of the frontward moving of the lift and drop operation plate 11, it is formed such that it is pushed by its protrusion 50 and accordingly with rotating, it renders to rotate said rotation lever 16.

Aforesaid push lever 7 is formed such that when said cassette tray 2 is loaded, it rotates with contacting to a contact plate 51 which is formed by being bent downwardly at a frontward portion of the base plate 1, and it is allowed to rotate a push bar 52 through the gear and the coupling movement mechanism of the cam.

Aforesaid cassette take out lever 8 is fixed by a shaft pin 54 at a supporting plate 53 fixed between both side plates 13, 13 of the cassette tray 2, said take out lever 8 and the supporting plate 53 is connected with a tension spring 55 which urges the take out lever 8 in counter clockwise resiliently, and it is formed such that an inclined cam 56 is fixed at predetermined portion of the base plate 1 so that the take out plate 8 is slided.

Aforesaid loading motor 4 and cassette lift and drop motor 5, whose rotating direction or whether to stop or not etc. are determined in accordance with the combination of ON.OFF signals of the first, second, third and fourth location detecting switches 61, 62, 63, 64 fixed respectively at a predetermined location of the base plate 1.

FIGs. 4 and 5 show a DAT cassette, as shown in the drawings, a tape cassette 70 is established such that a slider 74 can be opened and closed in sliding manner to a main body 73 which a magnetic tape 71 is wound at reels 72 and contained therein, the reel hub exposing holes 75 are formed on the both sides at a main body 73, to a slider 74 is formed with a pierced hole 76 which is corresponded to the reel hub exposing hole 75 of the main body 73 in case of opening. And at both sides of the pierced hole 76 is formed respectively with a guide hole 77 which the release protrusion 57 of said cassette holder 3 is inserted, at the same time to the guide holes 77 of both sides is formed respectively at front portion with a lock hole 79 which a locker 73 protruded from the interior of the main body 73, a protect cover 80 is coupled by a hinge to the main body 73, to which protect cover 80 there is formed with a groove 81 which the hooking piece 58 of said cassette holder 3 is inserted.

A DAT cassette like this, is loaded and unloaded into the interior of DAT by said front loading apparatus, the loading operation is executed by a step which it is carried on the cassette holder 3 and moved as long as predetermined distance into the interior of the apparatus and by a step which it is moved vertically and set safely and properly to the reel table mounted at the base plate 1, the slider 74 is opened in time of horizontal movement and the protecting cover 80 is opened in time of vertical movement.

Hereinbelow, explaining more specifically the loading and unloading operation of a cassette in accordance with the conventional cassette front loading apparatus as described hereinbefore as follows.

FIGs. 1, 2 and 3A show the state that a cassette tray is ejected, at this moment a protrusion 59 of the connecting piece 27 fixed at a cassette tray 2 is contacted to a first location detecting switch 61 and becomes ON and the loading motor 4 is stopped.

In this condition, a cassette 70 is put in a cassette tray 2 and when the cassette tray 2 is slightly pushed into the innerward (into the rearward), the first location detecting switch 61 becomes OFF and the loading motor 4 rotates positively, with that power the cassette tray 2 together with the cassette holder 3 and the cassette 70 are pushed into innerward, the push bar 52 moves from the guide hole 60 of the cassette tray 2 trough the gear and the coupling movement mechanism of the lever in accordance with the push lever 7 being contacted to the contact plate 51 and then rotated, the cassette 70 is pushed by push bar 52 and is slightly moved inwardly and the release protrusion 57 of the cassette holder 3 is inserted to its guide groove 77 and the lock of slider 74 is released, at the same time the hooking piece 58 is inserted to the inserting hole 81 to which hooking piece 58 the front edge portion of slider 81 is hooked up, and it is supported stably by which the top surface is pressed with the rubber pressing roller 65 fixed adjacent to the connecting piece 15 of cassette holder 3. After the cassette 70 is set stably to the cassette holder 3 in this condition the cassette tray 2, cassette holder 3 and cassette 70 are moved continuously to inward by the driving power of the loading motor 4, when the protrusion 66′ formed at a side plate 13 of cassette tray 2 actuate the second location detecting switch 62 and becomes ON then the loading motor 4 is stopped and the horizontal movement of the cassette tray 2 is completed, subsequently the cassette lift and drop motor 5 is rotated and the worm 29 and driving gear 9 are rotated and then the lift and drop driving plate 11 meshed with the small gear 32 of the driving gear 9 is moved frontwardly and then its protruded piece 66 is left away from the third location detecting switch 63 and the third location switch 63 becomes OFF, in accordance to the lift and drop operation plate 11 being moved, the contact piece 44 of the slider opening plate 6 contacted to which cam step portion 45 is lifted up, and the slider opening plate 6 is rotated in counterclockwise (based on FIG. 1) around the shaft 41 and contacted to the top surface of the cassette 70, in accordance with the driving gear 9 being rotated continuously by the driving power of driving motor 5, the lift and drop plate 11 is kept moving frontwardly at the same time the opening operation plate 10 is moved rearwardly by the operation of the cam lever 36 and the cam groove 33 of the bottom surface of driving gear 9 and the slider opening plate 6 are moved together rearwardly, thus the slider opening plate is moved, and whose hooking piece 43 hooks the cassette main body 73 and moves, therefore the cassette main body 73 is moved together, at this moment the slider 74 is hooked to the cassette holder 3 and the movement is stopped, according to the slider 74 being opened and whose pierced hole 76 and the reel hub exposing hole 57 of main body 73 being coincided each other.

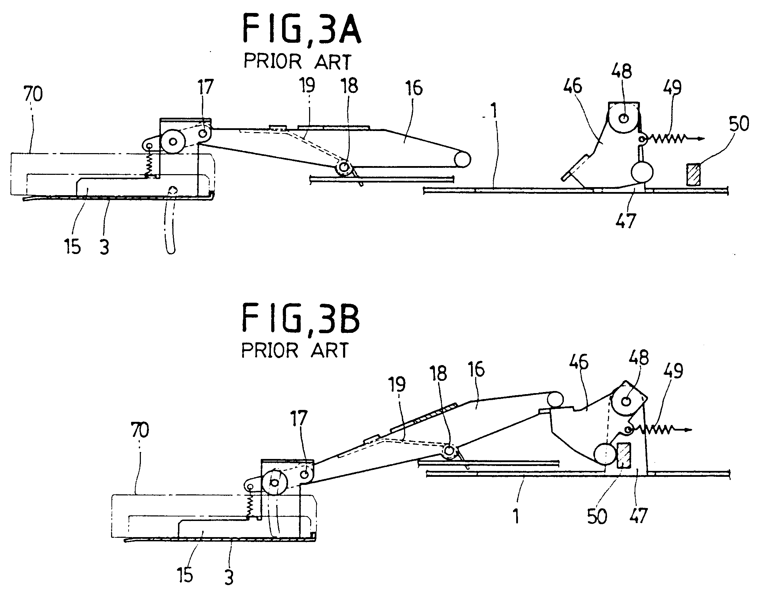

Thereafter, in accordance to the driving gear being kept rotating, the cam lever 36 cooperatively moving along with the cam groove 33, whose pin 37 is contacted to the concentric circle portion of the cam groove 33 and the rotation is stopped at the same time, accordingly the opening operation plate 10 and the slider opening plate 6 also are stopped, but the lift and drop plate 11 is allowed to keep moving frontwardly as in FIG. 3B, the protrusion 50 of which lift and drop plate 11 makes to rotate the rotation relay lever 46, in accordance to the rotation relay lever 16 being made the rotation lever 16 to rotate, the cassette holder 3 connected thereto is moved downwardly and vertically and is set stably on the reel table coupled to the predetermined portion of the base plate 1, at this moment the protrusion 67 protruded at the lift and drop plate 11 actuates the fourth location detecting switch 64 then the cassette lift and drop motor 5 is made to stop.

In the above described process, summarizing the operation of the location detecting switches, if the state that the first to fourth location detecting switches 61-64 are depressed is supposed to be ON, in case of ejecting when the first location detecting switch 61 is ON then the loading motor 4 and the lift and drop motor 5 is got to stop; when the first location detecting switch 61 is OFF and the third location detecting switch 63 is ON then the loading motor 4 is got to positively rotate and continues to rotate until the second location detecting switch 62 becomes ON; when the second location detecting switch 62 becomes ON in the state that the third location detecting switch 63 is ON then the loading motor 4 is got to stop and the lift and drop motor 5 is rotated positively and the cassette 70 is got to set on the reel tables. When the cassette is set then the fourth location detecting switch 64 becomes ON by the protrusion 67 of the lift and drop operation plate 11 and the lift and drop motor 5 is got to stop and becomes to recognize the state of the cassette 70 being set.

Within the state that the cassette 70 is set on the reel tables, the tape 71 contained in the cassette 70 is drawn by the tape running mechanism and is applied to a rotary head drum and getting it to run by the driving power of the capstan motor, the recording or reproducing is executed (the rotary head drum, capstan motor and tape running mechanism are not shown in drawings).

After the play and record are executed as described above, in case when it is intended to eject, it is executed by the reverse operation procedure of abovementioned operation procedure, which is composed of such that when the cassette tray 2 is moved frontwardly and horizontally, the contact piece 68 of the take out lever 8 connected thereof is contacted to the inclined cam 56 fixed to the base plate 1 and is rotated in clockwise around the shaft pin 54, and the cassette 70 which the take out piece 69 is adhered with pressure to the cassette holder 3 by the rubber pressure roller 65 is pushed out slightly to forward so that a user can easily take out the cassette 70.

Since a conventional DAT front loading apparatus as described above uses the loading motor in order to move horizontally the cassette holder and cassette, and it uses the lift and drop motor in order to move vertically the cassette holder and cassette, accordingly both of the loading and unloading motors are required for loading and unloading of the cassette, and since it is formed with very much complicated structure that a device for setting stably the cassette at the cassette holder, a device for moving the cassette horizontally, a device for opening the slider, a device for lifting and dropping the cassette, a take out device for taking out so as to take out the cassette easily from the cassette holder, and the location detecting switch device, since all of these are requiring so many parts, there are the disadvantages that a productivity is decreased and the manufacturing cost is increased.

Reference is made to GB-A-2020081 which relates to a front-loading cassette tape deck having a cassette tray which can be moved outwards and forwards to load a cassette.

Therefore, the object of the present invention is to solve the conventional disadvantages of the prior art apparatus described above, and to provide a cassette front loading apparatus of DAT which without utilizing the separate loading and unloading motor for loading and unloading the cassette, it is made possible to execute by utilizing a capstan motor and the mechanism is very much simplified.

According to the present invention there is provided a cassette loading apparatus for a digital audio tape recorder which comprises: a main body having side brackets which are fixed vertically in parallel at both sides of a base plate; a cassette tray having a door arranged at a frontward end portion of slide plates and a supporting plate is fixed at an intermediate portion of said slide plates; and a cassette holder for holding a cassette and having an aperture, release protrusion and engaging device characterised in that the loading apparatus comprises first and second guide slots and formed respectively in said side brackets and slide plates; a guide groove formed at a frontward portion of the interior of one of said slide plates; a first plate which is connected by a first axle shaft to said cassette holder;
guide pins which are arranged at opposing side surfaces of the cassette holder and the first plate, and which support the cassette holder and the first plate by passing through the first and second guide slots of the side brackets through the first and second guide slots of the side plates, which guide their horizontal movement and the vertical movement of the cassette holder;
guide pins which are provided at said slide plates and which support the cassette tray by being inserted into respective guide slots of the side brackets, and a guide pin which is formed at a side surface of said cassette holder and which supports said cassette holder by being inserted into said guide groove, at the same time guiding the horizontal and vertical movement of said cassette holder;
a rack which is formed at a slide plate of said cassette tray;
a driving gear which has integrally a large gear arranged to be driven and a small gear which is meshed with said rack; and
a second plate which is rotatably fixed via a second axle shaft at a rear end portion of said side brackets and is provided with at both front end portions thereof connecting grooves connected with connecting portions of said first plate, whereby in case of cassette loading, the cassette tray, cassette holder and first plate are moved horizontally by the rotation of the driving gear, thereafter the cassette holder is to be moved vertically.

Thus the present invention provides a cassette front loading apparatus of DAT which in accordance with a rack formed to engage the driving mechanism and cassette tray being cooperatively moved by the driving power of the capstan motor, the cassette tray, cassette holder and cassette are supported with the guide holes of both side brackets fixed tightly at both sides of the base plate and executed with the horizontal guided movement, at a stage that the cassette tray is horizontally moving, the cassette tray is moved with an over stroke as long as a predetermined length and then the slider is opened so that the horizontal moving mechanism of the cassette and the slider opening mechanism are simplified.

A preferred embodiment of the present invention provides a cassette front loading apparatus of DAT which when the cassette holder and cassette have completed the horizontal movement, a cam lever and turning plate cooperatively connected to a cam groove of the internal surface of said driving gear is turned and accordingly the cassette holder is moved downwardly and vertically so that the lift and drop mechanism is simplified.

In another embodiment of the present invention in case of the cassette ejecting, at a state that the cassette holder has completed its horizontal movement, the cassette tray is moved with an over stroke up to a predetermined distance and then the protrusion of a supporting plate fixed thereto pushes the cassette and causes it to come out of the cassette holder so that the cassette take out mechanism is simplified.

Another embodiment of the present invention provides a cassette front loading apparatus of DAT in which a leap switch fixed at a side bracket of the base plate is operated by the switch lever operated by the guide piece of the cassette holder and then the operating location of the mechanism is detected and accordingly the driving of the capstan motor is controlled so that the location detecting switch device of the mechanism is simplified.

For a better understanding of the present invention and to show how the same may be carried into effect, reference will now be made by way of example to the accompanying drawings, in which:-
FIG. 1 is a top view of a conventional cassette front loading apparatus which is shown at a state that a cassette tray is ejected.
FIG. 2 is a bottom view of FIG. 1.
FIGs. 3A and B are sectional views showing the cassette lift and drop mechanism of FIG. 1.
FIGs. 4A and B are perspective views of a conventional DAT cassette.
FIG. 5 to FIG. 11 show the structures and operations of a cassette front loading apparatus according to the present invention, in which;
FIG. 5 is an exploded perspective view of a whole of same as above.

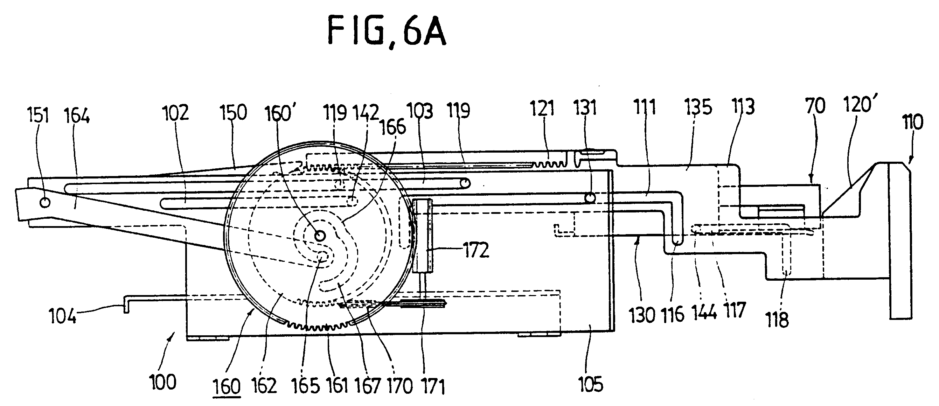

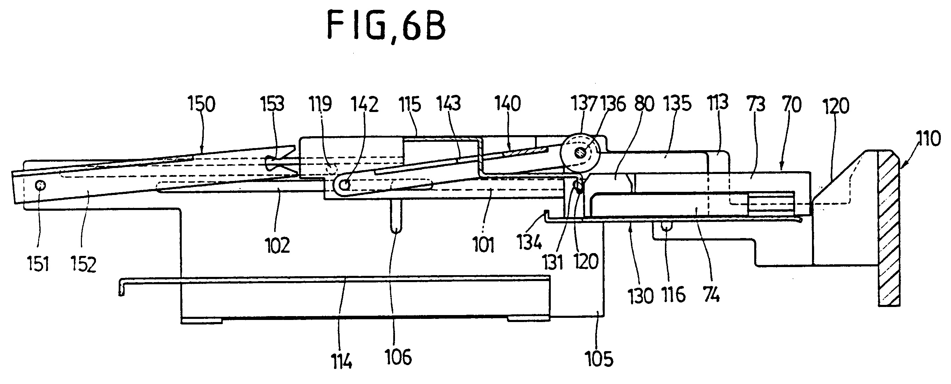

FIGs. 6A and 6B are respectively a side view and a sectional view showing a state before the cassette is loaded.

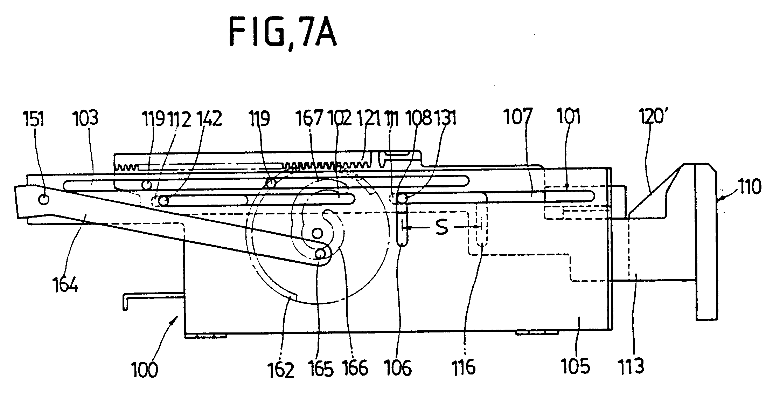

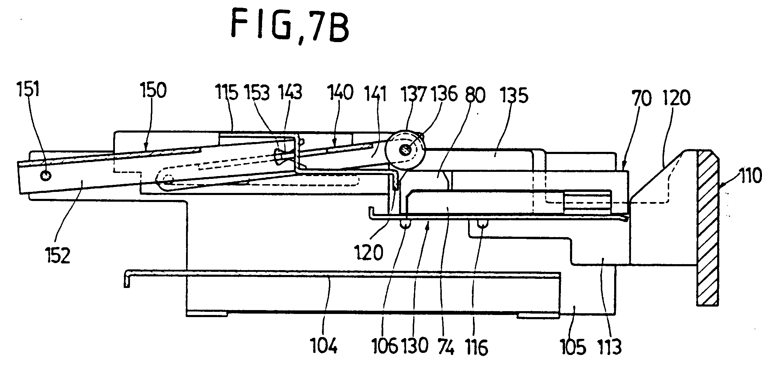

FIGs. 7A and 7B are respectively a side view and a sectional view showing a state immediately before the slider of the cassette being taken off after the horizontal movement of the cassette holder is completed during the process of the cassette being loaded.

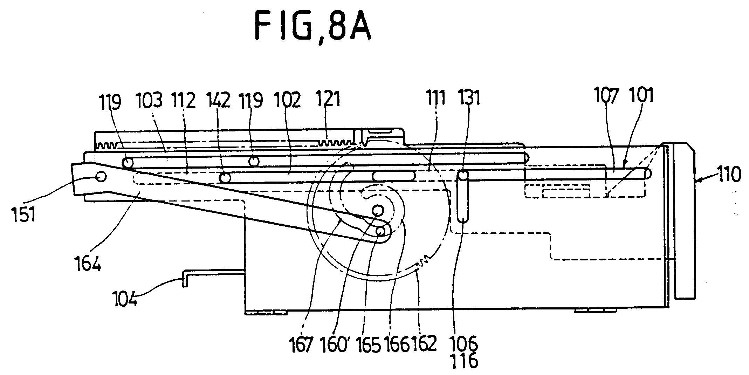

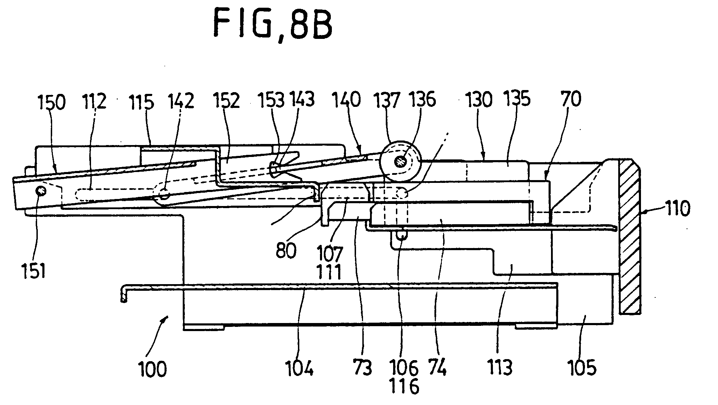

FIGs. 8A and 8B are respectively a side view and a sectional view showing a state immediately before the cassette moves vertically after the cassette tray is moved with an over stroke and then the slider is taken off at a state that the horizontal movement of the cassette holder is completed.

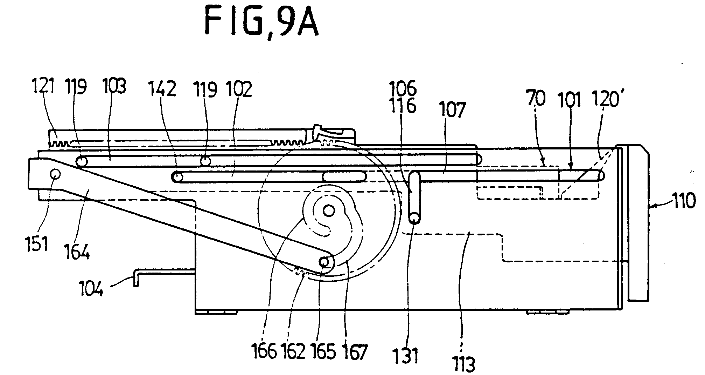

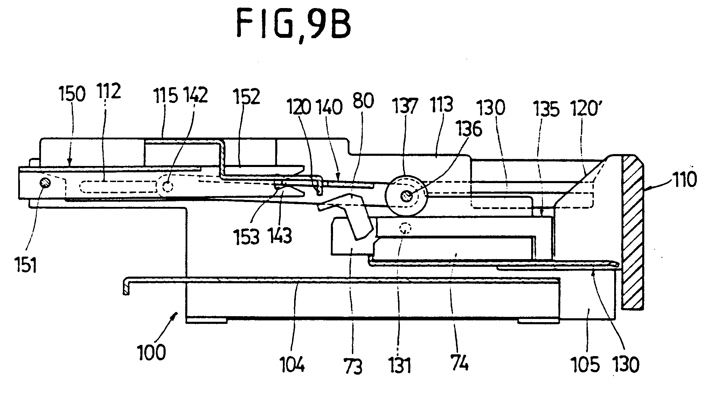

FIGs. 9A and 9B are respectively a side view and a sectional view showing a state that the cassette loading is completed.

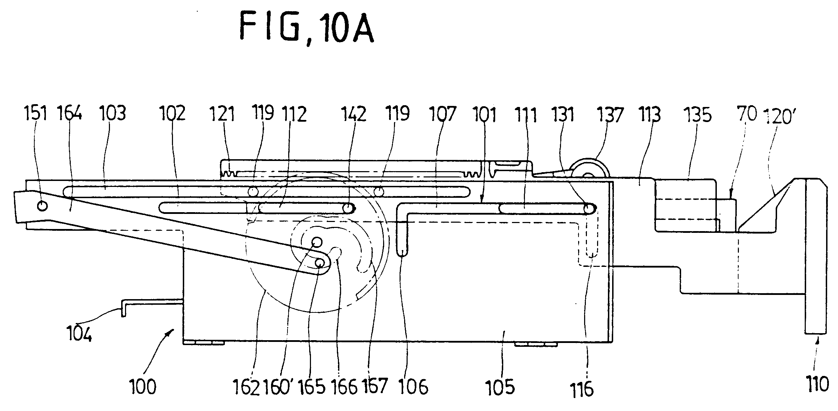

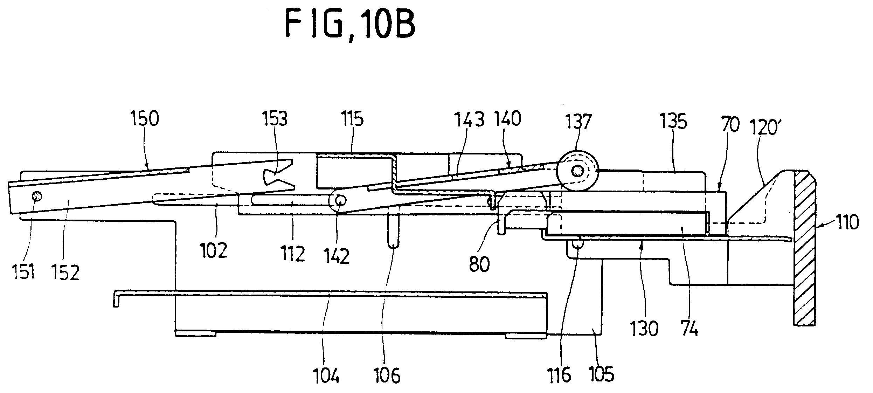

FIGs. 10A and 10B are respectively a side view and a sectional view showing a state immediately before the slider being closed after the horizontal movement of the cassette holder is completed during the process of the cassette being unloaded.

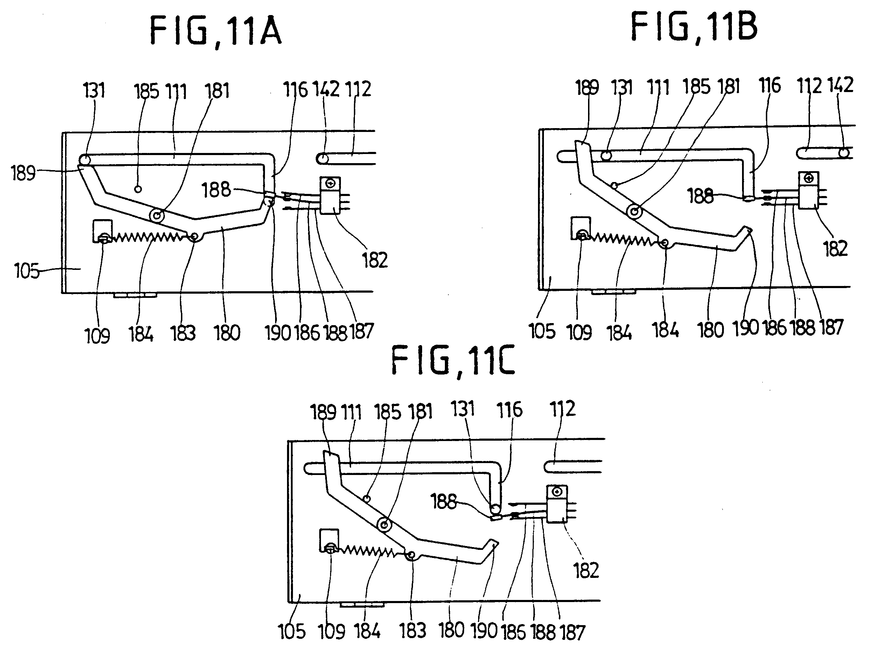

FIGs. 11A, B and C are the side views which show the location detecting switch mechanism according to the present invention, in which;
FIG. 11 A is a side view showing a state which the upper terminal and intermediate terminal of the leap switch are connected at a state that the cassette tray being ejected.
FIG. 11B is a side view showing a state which the intermediate terminal and the upper and lower terminal of the leap switch are separated in case of the cassette tray being loaded.
FIG. 11C is a side view showing a state which the intermediate terminal is connected with the lower terminal of the leap switch at a state that the cassette tray being completed to load.

Hereinafter, explaining the present invention described as above more in detail with reference to the accompanying drawings FIG. 5 to FIG. 11 as follows.

The cassette front loading apparatus for a DAT according to the present invention comprises a main body 100, a cassette tray 110 which linearly moves inwardly of which main body 100, a cassette holder 130 and a lift and drop plate 140 arranged at which cassette tray 110, and a rotating plate 150 mounted at rearward portion of said main body 100.

Aforesaid main body is structured such that a pair of brackets 105 are fixed at both side portions of a base plate 104 and first and second guide holes 101 and 102 are respectively formed on a same straight line, and the third guide hole 103 is formed long at the upper side, and a vertical portion 106 is formed integrally in perpendicular crossing at the rear end portion of the first guide hole 101.

Aforesaid cassette tray 110 is structured with both side slider plates 113 located at the inner side of the bracket 105, and a door 114 mounted at which front end portion, and a supporting plate 115 fixed at intermediate portion.

At said both side slider plate 113, the first guide holes 111 and second guide holes 112 are formed on a same straight line, a vertical portion 116 is formed integrally so as to be crossed perpendicularly at the rear end portion of the first guide holes 111, and the guide pins 119 fixed at both side slider plates 113 are inserted into the third guide hole 103 of said bracket 105.

A pair of pierced holes 132 are formed at said cassette holder 130, a release protrusion 133 and a hooking piece 134 are respectively formed at the rearward portions of the pierced holes 132, the guide pins 131 fixed at a center of the rearward portion of both side surfaces 135 of the cassette holder 130 are inserted to the first guide holes 111, 101 of said slider plate and bracket 105, and a guide pin 144 formed at the lower side of the frontward portion of a side surface 135 is inserted to the guide hole 117 formed at the internal surface of a side slider plate 113. A guide hole 117 is formed integrally with the vertical portion 118 at the end portion as a first guide hole 111.

Aforesaid lift and drop plate 140 is formed with a guide pin 142 at the rear end portions of both side surfaces 141, whose guide pins 142 are respectively inserted to the second guide holes 112, 102 formed at said slider plate 113 and bracket 105, and both side surfaces 141 of the lift and drop plate 140 and both side surfaces 135 of the cassette holder 130 are connected by a shaft bar 136, and a rubber pressure roller 137 for supporting the cassette 70 is secured to the shaft bar 136.

Aforesaid guide pins 131, 142, 144 and 119 support the cassette holder 130, the lift and drop plate 140 and the cassette tray 110 at the bracket 105 of the main body 100, and guide their horizontal movement, and guide the vertical movement of the cassette holder 130. And the guide pins 131, 142 can move horizontally together with the cassette holder 130 and the lift and drop plate 140 as long as the length of the first guide hole 101 and second guide hole 102 of both side bracket, and their movement become to stop when the guide pins 131, 142 contact to the front end portion or rear end portion of the first, second guide holes 101, 102 of the side brackets 105, and this cassette tray 110 can further move to outside or to inside as long as the length of horizontal portion of the guide groove 117 and the first, second guide holes 111, 112 formed at both slider plate 113. That is to say, the horizontal length of the guide groove 117 and the first, second guide holes 111, 112 render possible the over stroke of the cassette tray.

A take out protrusion 120 is formed at the intermediate portion of the supporting plate 115 of said cassette tray 110, and a draw in protrusion 120′ is fixed at both side on the internal surface of a door 114 of the cassette tray 110.

A driving gear 160 which has a large gear 161 and a small gear 162 to which internal surface a cam groove 163 is formed, is fixed by a shaft pin 160′ at a side bracket 105 of said main body 100, a rack which is formed longitudinally at a side slider plate 113 of the cassette tray 110 is meshed with the small gear 162 of the driving gear 160, a worm 172 which rotates by receiving through a power transmission means 171 the driving power of the known capstan motor 170 mounted at the base plate 104 of the main body 100 at the large gear 161, is meshed.

As for said power transmision means, the pulley, belt and gear train etc. can be utilized, and whose struture also can be constructed with variety.

Aforesaid turning plate 150 is fixed at the intermediate portion of the shaft bar 151 fixed rotatably at the rear end portion of both side brackets 105 of the main body 100, at both side surface 152 of which turning plate are respectively formed with the connecting grove 153 which the connecting portion 143 of said lift and drop plate 140, at a side surface 152 of the turning plate 150 is fixed with the cam lever 164.

At the front end portion of which cam lever 164 is fixed with a slide pin 165 thereby is inserted into the internal cam groove 163 of the cam gear 160.

In addition, at the lower side of the guide hole 101 of the other side bracket 105 front portion of said main body 100, the switch lever 180 is fixed with the axle pin 181 and a leap switch 182 is fixed adjacently, a tension spring 184 is fixed which urges resiliently the switch lever 180 in clockwise at the protrusion 107 of the other side bracket 105 and the protrusion 183 of the switch lever 180, and a stop pin 185 which controls the revolution is fixed at the upper side of the switch lever 180.

Aforesaid leap switch 182 is formed with the upper and lower terminals 186, 187 and intermediate terminal 188, and the front end contact portion 189 of the intermediate terminal 188 is located at the vertical portion 106 of the first guide hole 101.

Aforesaid switch lever 180, at a state that the cassette tray 110 is ejected, whose front end portion 189 is contacted and pressed to the first guide pin 131 of the cassette holder 130, whose rear end portion 190 pushes up the intermediate terminal 188 of the leap switch 182, accordingly the upper terminal 186 and the intermediate terminal 188 of the leap switch 182 is connected.

Hereinafter, explaining the operation and effect of the present invention as follows.

FIGs. 6A and 6B show the state that the cassette tray 110 is completly opened at the main body 100, in this state, the guide pin 131 of the bracket 105 and the guide pin 142 of the lift and drop plate 140 are contacted at the right side end portion of the guide holes 101, 102 of bracket 105, as shown in FIG. 11A the guide piece 131 of cassette holder 130 presses the front end portion of the switch lever 180, so that its rear end portion 190 pushes the intermediate terminal 188 of the leap switch 182 upwardly then the intermediate terminal 188 and the upper terminal 186 are contacted therefore the electric power is cut off to the capstan motor 170, thus when the intermediate terminal 188 and the upper terminal 186 are connected and they become ON, then the DAT syscon (DAT system control micro processor) recognizes that the cassette tray 110 is in the open state. In addition at this state, the pin 165 fixed at the front end portion of said cam lever 164 is located at the concentric circle portion 166 of the cam groove 163 formed at the driving gear 160.

Thus, at a state that the tray 110 is opened, when the cassette 70 is put in to the cassette holder 130 and the cassette tray 110 is pushed to the interior a little, the guide piece 131 of cassette holder 130 becomes pushed to the interior thereby the switch lever 180 is turned around the axle pin 181 by the tension spring 184 as in FIG. 11B and whose rear end portion 190 becomes taken off from the intermediate terminal 188 of the leap switch 182, therefore the intermediate terminal 188 is changed to a neutral position and left away from the upper terminal 186 and then becomes OFF, and the switch lever 180 is restricted so as not to turn any more by being caught to a stop pin 185.

Thus, when the upper terminal 186 and the intermediate terminal 188 of the leap switch 182 is separated and they become OFF, the electric power is supplied to the capstan motor 170 and it turns, the driving gear 160 cooperatively coupled to the worm 172 turns counterclockwise, and the cassette tray 110 meshed with the rack 121 to the small gear 162 of driving gear 160 moves to inward.

Thus, the cassette tray 110 moves inwardly and the lift and drop plate 140 and the cassette holder 130 contained with the cassette 70 move together horizontally, and as shown in FIGs. 7A and 7B the guide pin 131 of the cassette holder becomes to touch at the bent portion 108 which is the intermediate portion between the horizontal portion 107 and vertical portion 106 of the first guide hole 101 formed at the bracket 105.

When it becomes thus, the cassette holder 130 and the lift and drop plate 140 is no more able to be moved inwardly and is stopped, and a distance for opening the slider 74 of the cassette 70 as long as S is held between the vertical portions 106, 116 of the first guide hole 111 of the tray and the first guide hole 101 of the bracket. At this state, when it is moved more inwarly in accordance with the continuous revolution of the driving gear 160, then the slider 74 of cassette 70 becomes caught by the hooking piece 134 and can be moved 30 more, and only main body 70 becomes pushed to the draw in protrusion 120′ formed at the interior of the door 114 and moved inwardly, the slider 74 is opened completely until the first guide hole 111 of the tray 110 is moved as long as the distance S and is reached to the state of FIGs. 8A and 8B, at this moment the first guide hole 111 and the vertical portions 116, 106 of the first guide hole 101 of main body become to coincide, at the same time the inserting portion 143 of the lift and drop plate 140 is inserted to the connecting groove 153 of the turning plate 150.

Within the state that became as thus, when the driving gear 160 is turned continuously counterclockwise by the revolutional power of the capstan motor 170, the pin 165 of cam lever 164 is moved with riding along the radius variation portion 167 of cam groove 163, accordingly the cam lever 164 is turned clockwise around the axle shaft 151 and then the turning plate 150 is turned clockwise together with the cam lever 164, in accordance with the turning plate 150 being turned clockwise, the lift and drop plate 140 is turned clockwise around the guide pin 142, and the cassette holder 130 connected with the shaft bar 136 thereto is moved vertically and downwardly, thereby as shown in FIGs. 9A and 9B the cassette 70 contained in said cassette holder 130 is set on the supply reel table and take-up reel table arranged at the base plate 104. Thus, when the cassette holder 130 is moved downwardly, the guide pin 131 of which rear end portion is guided to the vertical portions 106, 116 of guide holes 101, 111 of the tray 110 and main body 100 and the front end guide pin 144 is moved downwardly riding along the vertical portion 118 of the guide hole 117 formed at the internal surface of a side plate 113 of the tray 110, during dropping the protect cover 80 of the cassette 70 is opened by another separate cover opening means (not shown.

Thus, when the loading of the cassette 70 is completed, in accordance with the intermediate terminal 188 of leap switch 182 being pressed by the guide pin 131 of the cassette holder 130 as shown in FIG. 11C, the intermediate ternimal 188 is bent downwardly from the neutral position and connected with the lower terminal 187 and becomes ON and then the electric power becomes to cut off to the capstan motor 170 therefore it is stopped.

Thus, in a state that the cassette loading is completed, the tape 71 contained within the cassette 70 is made to run by the running drive mechanism arranged to the base plate 104 and so the desired mode such as the play is executed, in case where the cassette 70 is intended to eject, when the separate eject button (not shown) arranged at the exterior of main body 100 is pressed, in accordance with the capstan motor 170 being rotated to the reverse direction and then the driving gear 160 being rotated clockwise, the reverse operation against the above operation is executed therefore the cassette holder 130 is moved vertically to upward thereafter it is moved together with the cassette tray 110 toward the exterior of main body 100, at this moment the take out protrusion 120 of the supporting plate 115 fixed to the cassette tray 110 is moved forward with slightly pushing the cassette 70 on the cassette holder 130. Thus, when the guide pin 131 of the cassette holder 130 is contacted to the right side end portion of the first guide hole 101 of the bracket 105 as shown in FIG. 10, then it can be no more moved forwardly, and the cassette tray 110 becomes to move forward a little more by an over stroke of the guide holes 111, 112 of cassette tray 110, at this moment the support plate 115 fixed with the cassette tray 110 also is moved forward a little more, accordingly the cassette 70 which has been pressed and adhered by the rubber roller 137 formed at the axle shaft of the cassette holder 130 is pushed by the take out protrusion 120 of the supporting plate 115 and it is drawn to the exterior out of the cassette holder 130, so that a user becomes possible to take out easily.

As described hereinabove, since the present invention, without requiring to use separately the loading motor and the lift and drop motor for moving the cassette horizontally and lifting and dropping, the loading and unloading of the cassette can be executed by the existing capstan motor, the cost for establishing the motors is deleted, the horizontal and vertical movement device for the cassette, slider opening device, cassette take out device and the location detecting switch device and the like, the all of mechanism is very much simplified, thereby the number of parts employed are decreased, the part processing work and assembling work can be simplified, therefore there are the advantages that the productivity is outstandingly increased, and that the preciseness management of the products is easy in accordance with the simplified structure and the operation of the mechanism becomes smooth.

## Claims

1. A cassette loading apparatus for an audio tape recorder which comprises:
a main body (100) having side brackets (105) which are fixed vertically in parallel at both sides of a base plate (104);
a cassette tray (110) having a door (114) arranged at a frontward end portion of slide plates (113) and a supporting plate (115) fixed at an intermediate portion of said slide plates; and
a cassette holder (130) for holding a cassette and having an aperture (132), release protrusion (133) and engaging device (134) characterised in that the loading apparatus comprises first and second guide slots (101,111) and (102,112) formed respectively in said side brackets (105) and slide plates (113);
a guide groove (117) formed at a frontward portion of the interior of one of said slide plates (113);
a first plate (140) which is connected by a first axle shaft (136) to said cassette holder (130);
guide pins (131,142) which are arranged at opposing side surfaces of the cassette holder (130) and the first plate (140), and which support the cassette holder (130) and the first plate (140) by passing through the first and second guide slots (101,102) of the side brackets (105) through the first and second guide slots (111,112) of the side plates (113), which guide their horizontal movement and the vertical movement of the cassette holder (130);
guide pins (149) which are provided at said slide plates (113) and which support the cassette tray by being inserted into respective guide slots (103) of the side brackets (105), and a guide pin (144) which is formed at a side surface (135) of said cassette holder (130) and which supports said cassette holder (130) by being inserted into said guide groove (117), at the same time guiding the horizontal and vertical movement of said cassette holder;
a rack (121) which is formed at a slide plate (113) of said cassette tray (110);
a driving gear (160) which has integrally a large gear (161) arranged to be driven and a small gear (162) which is meshed with said rack (121); and
a second plate (150) which is rotatably fixed via a second axle shaft (151) at a rear end portion of said side brackets (105) and is provided with at both front end portions thereof connecting grooves (153) connected with connecting portions (143) of said first plate (140), whereby in case of cassette loading, the cassette tray (110), cassette holder (130) and first plate (140) are moved horizontally by the rotation of the driving gear (160), thereafter the cassette holder (130) is to be moved vertically.

2. A cassette loading apparatus for a digital audio tape recorder according to claim 1, wherein:
said first, second and third guide slots (101), (102) and (103) of said side brackets (105), the first and second guide slots (111) and (112) of said slide plates (113), and the guide groove (117) of the slide plate (113) are formed horizontally;
said first guide slots (101) and (111), and guide groove (117) comprise respectively at the rear end portion thereof vertical portions (106), (116) and (118);
said vertical portions of said first guide slot (111) and guide groove (117) have a predetermined length (S) so as to over stroke in case where the cassette tray (110) is loaded and unloaded; and
a drawing in protrusion (120) is located at the inner surface of said door (114) for the case of loading which causes the cassette main body (73) to overstroke wherein in the case of loading, said cassette tray (110), cassette holder (130), and the first drop plate (140) are moved horizontally, and the guide pins (131) and (142) engage the first and second guide slots (101) and (102) whereby the movement of the cassette holder (130) and cassette (70) is stopped, after which the cassette tray (110) and cassette main body (73) have an over stroke as long as the length of the first guide slot (111) and then the slider (74) is opened, after which the cassette holder (130) and cassette (70) are moved vertically.

3. A cassette loading apparatus for a digital audio tape recorder according to claim 1 or 2, wherein:
a cam lever (164) is fixed at a side surface of said second plate (150), at whose front end portion is fixed a slide pin (165); at the internal surface of said driving gear (160) there is formed a cam groove (163) having a concentric circle portion and radius variation portion; said slide pin (165) is inserted into the cam groove (163), whereby the horizontal movement of the cassette tray (110), cassette holder (130) and the first plate (140) is completed by the revolution of driving gear (160) after which the second plate (150) is turned and then the cassette holder (130) connected by the first plate (140) thereto is moved vertically.

4. A cassette loading apparatus for a digital audio tape recorder according to claim 1, 2 or 3 wherein:
a switch lever (180) is fixed by an axle pin (181) at the lower side portion of the first guide slot (101) of the frontward portion of the other side bracket (105) of said main body (100);
a tension spring (184) is connected at protrusions (184,109) of the other side bracket (105);
to an upper portion of the other side bracket there is fixed a stop pin (185) which restricts the turning of the switch lever (180), and at a predetermined location of the other side bracket (105) there is fixed a leap switch (182) which includes upper and lower terminals (186) and (187) and an intermediate terminal (188), whereby in case of ejecting the cassette tray (110), the front end portion of the switch lever (180) is contacted to and pressed by the guide piece (131) of the cassette holder (130), the rear end portion causes the intermediate terminal (188) to lift up so that the upper terminal (186) and intermediate terminal (188) are caused to connect, during loading, the intermediate terminal (188) is separated from the upper and lower terminals (186) and (187), and, when loading is completed, said guide pin (131) presses the intermediate terminal (188) downwardly so as to contact with the lower terminal (187).

5. A cassette loading apparatus for a digital audio tape recorder according to claim 1, wherein:
a cassette take out protrusion (120) is formed integrally at the intermediate portion of the support plate (115) of said cassette tray (110), whereby in case of unloading the cassete tray (110), the guide pin (131) of the cassette holder (130) is caught to the right side end portion of the first guide slot (101) of both side brackets (105) and then stopped after which the cassette tray (110) undergoes an over stroke causing the cassette (70) to come out of the cassette holder (130).

## Patentansprüche

1. Eine Kassettenladevorrichtung für einen Tonbandrekorder die beinhaltet:
einen Hauptkörper (100), welcher Seitenklammern (105) hat, die vertikal parallel zueinander an beiden Seiten einer Basisplatte (104) befestigt sind;
ein Kassettentablet (110), welches ein Tor (114) hat, das an einem vorderen Endbereich von Gleitplatten (113) angeordnet ist, sowie eine Tragplatte (115), welche an einem mittleren Bereich der Gleitplatten befestigt ist; und
einen Kassettenhalter (130), um eine Kassette zu halten, welcher eine Öffnung (132), einen Loslösevorsprung (133), und eine Angreifvorrichtung (134) hat, dadurch gekennzeichnet, daß die Ladevorrichtung erste und zweite Führungsschlitze (101, 111) und (102, 112) beinhaltet, die jeweils in die Seitenklammern (105) und Gleitplatten (113) geformt sind;
einen Führungsschlitz (117), der an einem frontwärtigem Bereich der Innenseite einer der Gleitplatten (113) geformt ist;
einer ersten Platte (140), die über einen ersten Achsschaft (136) mit dem Kassettenhalter (130) verbunden ist;
Führungstäben (131, 142), die an gegenüberliegenden Seitenoberflächen des Kassettenhalters (130) und der ersten Platte (140) angebracht sind, und die den Kassettenhalter (130) und die erste Platte (140) unterstützen, indem sie durch die ersten und zweiten Führungsschlitze (101, 102) der Seitenklammern (105) und durch die ersten und zweiten Führungsschlitze (111, 112) der Gleitplatten (113) gehen, welche ihre horizontale Bewegung und die senkrechte Bewegung des Kassettenhalters (130) führen;
Führungsstäben bzw. -stiften (149), welche an den Gleitplatten (113) vorgesehen sind und die das Kassettentablet dadurch unterstützen, daß sie in entsprechende Führungsschlitze (103) der Seitenklammern (105) eingefügt sind, und einem Führungsstab (144), der an einer Seitenoberfläche (135) des Kassettenhalters (130) geformt ist, und der den Kassettenhalter (130) dadurch unterstützt, daß er in den Führungsschlitz (117) eingefügt ist, der zur gleichen Zeit die horizontale und vertikale Bewegung des Kassettenhalters führt;
eine Zahnstange (121), die an einer Gleitplatte (113) des Kassettentablets (110) geformt ist;
eine Antriebsübersetzung bzw. Antrieb (160), welche eine große Übersetzung bzw. Zahnrad (161), die angeordnet ist, um angetrieben zu werden, und eine kleine Übersetzung bzw. Zahnrad (162), die mit der Zahnstange (121) ineinandergreifend ist, in einem Stück enthält; und
eine zweite Platte (150), die drehbar über einen zweiten Achsschaft (151) an einem hinteren Endbereich der Seitenklammern (105) befestigt ist, und die an beiden Frontendbereichen davon mit Verbindungsschlitzen (153) versehen ist, welche mit Verbindungsbereichen (143) der ersten Platte (140) verbunden sind, wobei im Falle des Ladens der Kassette das Kassettentablet (110), der Kassettenhalter (130) und die erste Platte (140) horizontal durch die Rotation der Antriebsübersetzung (160) bewegt werden, wonach der Kassettenhalter (130) vertikal bewegt werden muß.

2. Eine Kassettenladevorrichtung für einen digitalen Tonbandrekorder gemäß Anspruch 1, worin:
die ersten, zweiten und dritten Führungsschlitze (101), (102), und (103) der Seitenklammern (105), die ersten und zweiten Führungsschlitze (111) und (112) der Gleitplatten (113), und die Führungsrinne (117) der Gleitplatte (113) horizontal geformt sind;
die ersten Führungsschlitze (101) und (111), und der Führungsschlitz (117) jeweils im hinteren Endbereich davon vertikale Bereiche enthalten (106), (116) und (118);
die vertikalen Bereiche des ersten Führungsschlitzes (111) und des Führungsschlitzes (117) eine vorbestimmte Länge (S) haben, welche überstrichen bzw. überragt wird, wenn das Kassettentablet (110) be- und entladen wird; und
einen Einzugsvorsprung (120), welcher an der inneren Oberfläche des Tors (114) für den Fall des Ladens plaziert ist und der den Kassettenhauptkörper (73) zum Überragen bringt. Dabei werden im Falle des Ladens das Kassettentablet (110), der Kassettenhalter (130), und die erste Senkplatte (140) horizontal bewegt, und die Führungsstäbe (131) und (142) greifen die ersten und zweiten Führungsschlitze (101) und (102) an, wobei die Bewegung des Kassettenhalters (130) und der Kassette (70) angehalten wird, wonach das Kassettentablet (110) und der Kassettenhauptkörper (73) einen Überstand haben, welcher so lang ist, wie die Länge des ersten Führungsschlitzes (111), woraufhin der Schieber (74) geöffnet ist, wonach der Kassettenhalter (130) und die Kassette (70) vertikal bewegt werden.

3. Eine Kassettenladevorrichtung für einen digitalen Tonbandrekorder gemäß Anspruch 1 oder 2, worin:
ein Nockenhebel (164) an der Seitoberfläche der zweiten Platte (150) befestigt ist, an dessen vorderen Endbereich ein Gleitstab (165) befestigt ist; an der inneren Oberfläche der Antriebsübersetzung (160) eine Nutkurve (163) geformt ist, welche einen konzentrischen Kreisbereich und Radiusvariationsbereich hat; der Gleitstab (165) in die Nutkurve (163) eingefügt ist, wobei die horizontale Bewegung des Kassettentablets (110), des Kassettenhalters (130) und der ersten Platte (140) durch die Rotation der Antriebsübersetzung (160) vollendet wird, wonach die zweite Platte (150) gedreht wird und darauf der Kassettenhalter (130), welcher zu diesem Zweck durch die erste Platte (140) verbunden ist, senkrecht bewegt wird.

4. Eine Kassettenladevorrichtung für einen digitalen Tonbandrekorder gemäß Anspruch 1, 2 oder 3, worin:
ein Schalthebel (180) durch einen Achsstab (181) an einem unteren Seitbereich des ersten Führungsschlitzes (101) des vorderen Bereichs der anderen Seitenklammer (105) des Hauptkörpers (100) befestigt ist;
eine Spannfeder (184) mit Vorsprüngen (184, 109) der anderen Seitenklammer (105) verknüpft ist;
an einem oberen Bereich der anderen Seitenklammer ein Anhaltestab (185) befestigt ist, welcher das Drehen des Schalthebels (180) verhindert, und an einem vorbestimmten Ort der anderen Seitenklammer (105) ein Sprungschalter (182) befestigt ist, der obere und untere Pole (186) und (187) und einen mittleren Pol (188) enthält, wobei im Falle des Herauswerfens des Kassettentabletts (110), der vordere Endbereich des Schalthebels (180) von dem Führungsstück (131) des Kassettenhalters (130) berührt und gepresst wird, so daß der hintere Endbereich den mittleren Pol (188) zum Aufsteigen bringt, so daß der obere Pol (186) und der mittlere Pol (188) in Verbindung gebracht werden; im Falle des Ladens, der mittlere Pol (188) von den oberen und unteren Polen (186) und (187) getrennt wird, und, wenn das Laden vollendet ist, der Führungsstab (131) den mittleren Pol (188) nach unten derart drückt, daß er mit dem unteren Pol (187) Kontakt hat.

5. Eine Kassettenladevorrichtung für einen digitalen Tonbandrekorder gemäß Anspruch 1, worin:
ein Kassettenentnahmevorsprung (120) integriert im mittleren Bereich der Tragplatte (115) des Kassettentablets (110) geformt ist, wobei im Falle des Entladens des Kassettentablets (110), der Führungsstift (131) des Kassettenhalters (130) am rechten, seitlichen Endbereich des ersten Führungsschlitzes (101) der beiden Seitenklammern (105) festgehalten wird und sodann angehalten wird, wonach das Kassettentablett (110) einen Überstand erfährt, der verursacht, daß die Kassette (70) aus dem Kassettenhalter (130) herauskommt.

## Revendications

1. Appareil de chargement de cassette pour un enregistreur de bande audio numérique comprenant :
- un corps principal (100) pourvu d'appliques latérales (105) qui sont fixées verticalement en parallèle sur les deux extrémités d'une plaque de base (104) ;
- un plateau à cassette (110) pourvu d'une trappe (114) disposée sur une partie extrémité frontale de plaques coulissantes (113) et une plaque support (115) fixée sur une partie intermédiaire desdites plaques coulissantes ; et
- un support de cassette (130) destiné à supporter une cassette et pourvu d'une ouverture (132), d'une saillie de dégagement (133) et d'un dispositif d'engagement (134) caractérisé en ce que l'appareil de chargement comprend des premières et deuxièmes fentes de guidage (101, 111) et (102, 112) formées respectivement dans lesdites appliques latérales (105) et plaques coulissantes (113) ;
- une rainure de guidage (117) formée sur une partie frontale de l'intérieur de l'une desdites plaques coulissantes (113) ;
- une première plaque (140) qui est reliée par un premier arbre de commande (136) audit support de cassette (130) ;
- des broches de guidage (131, 142) qui sont disposées sur des faces latérales opposées du support de cassette (130) et de la première plaque (140), et qui supportent le support de cassette (130) et la première plaque (140) en passant à travers les premières et deuxièmes fentes de guidage (101, 102) des appliques latérales (105) à travers les premières et secondes fentes de guidage (111, 112) des plaques coulissantes (113), qui guident leur déplacement horizontal et le déplacement vertical du support de cassette (130) ;
- des broches de guidage (149) qui sont prévues sur lesdites plaques coulissantes (113) et qui supportent le plateau à cassette en étant insérées dans les fentes de guidage respectives (103) des appliques latérales (105), et une broche de guidage (144) qui est formée sur une face latérale (135) dudit support de cassette (130) et qui supporte ledit support de cassette (130) en étant insérée dans ladite rainure de guidage (117), tout en guidant le déplacement horizontal et vertical dudit support de cassette ;
- une crémaillère (121) qui est réalisée sur une plaque coulissante (113) dudit plateau à cassette (110) ;
- un pignon d'entraînement (160) formé d'une seule pièce d'un grand pignon (161) disposé pour être entraîné et d'un petit pignon (162) qui s'engrène avec ladite crémaillère (121) ; et
- une seconde plaque (150) qui est fixée de façon mobile en rotation à l'aide d'un second arbre (151) sur une partie d'extrémité arrière desdites appliques latérales (105) et qui est pourvue sur ses deux parties d'extrémité frontales de rainures de liaison (153) reliées aux parties de liaison (143) de ladite première plaque (140), ce par quoi, en cas de chargement de cassette, le plateau à cassette (110), le support de cassette (130) et la première plaque (140) sont déplacés horizontalement par la rotation du pignon d'entraînement (160) puis le support de cassette (130) peut être déplacé verticalement.

2. Appareil de chargement de cassette pour un enregistreur de bande audio numérique selon la revendication 1, dans lequel :
- lesdites premières, deuxièmes et troisièmes fentes de guidage (101), (102) et (103) desdites appliques latérales (105), lesdites premières et deuxièmes fentes de guidage (111) et (112) desdites plaques coulissantes (113), et la rainure de guidage (117) de la plaque coulissante (113) sont réalisées horizontalement ;
- lesdites premières fentes de guidage (101) et (111), et la rainure de guidage (117) comprennent respectivement, sur leur partie d'extrémité arrière, des parties verticales (106), (116) et (118) ;
- lesdites parties verticales de ladite première fente de guidage (111) et de la rainure de guidage (117) présentent une longueur prédéterminée (S) de façon à changer la course dans le cas où le plateau à cassette (110) est chargé ou déchargé ; et
- un extracteur en saillie (120) est situé sur la face interne de ladite trappe (114) qui provoque, dans le cas du chargement, le changement de la course du corps principal de cassette (73), dans lequel en cas de chargement, ledit plateau à cassette (110), le support de cassette (130), et la première plaque (140) sont déplacés horizontalement, et les broches de guidage (131) et (142) s'engagent dans les premières et deuxièmes fentes de guidage (101) et (102), ce par quoi le déplacement du support de cassette (130) et de la cassette (70) est arrêté, après quoi le plateau de cassette (110) et le corps principal de cassette (73) effectuent un changement de course de la même longueur que celle de la première fente de guidage (111) et, ensuite, le volet coulissant (74) est ouvert, après quoi le support de cassette (130) et la cassette (70) sont déplacés verticalement.

3. Appareil de chargement de cassette pour un enregistreur de bande audio numérique selon la revendication 1 ou 2, dans lequel :
- un levier de came (164) est fixé sur une face latérale de ladite seconde plaque (150), une broche coulissante (165) étant fixée sur sa partie extrémité frontale ; sur la face interne dudit pignon d'entraînement (160) une came en rainure (163) est réalisée, présentant une partie circulaire concentrique et une partie dont le rayon varie ; ladite broche coulissante (165) est insérée dans la came en rainure (163), ce par quoi le déplacement horizontal du plateau à cassette (110), du support de cassette (130) et de la première plaque (140) est obtenu par la rotation du pignon d'entraînement (160), après quoi la seconde plaque (150) est tournée et, ensuite, le support de cassette (130) relié par la première plaque (140) à celle-ci est déplacé verticalement.

4. Appareil de chargement de cassette pour un enregistreur de bande audio numérique selon la revendication 1, 2 ou 3, dans lequel :
- un levier de commutation (180) est fixé par une broche de commande (181) sur la partie latérale inférieure de la première fente de guidage (101) de la partie frontale de l'autre applique latérale (105) dudit corps principal (100) ;
- un ressort de tension (184) est relié à des saillies (184, 109) de l'autre applique latérale (105) ;
- sur une partie supérieure de l'autre applique latérale est fixée une broche d'arrêt (185) qui limite la rotation du levier de commutation (180), et à un emplacement prédéterminé de l'autre applique latérale (105) est fixé un commutateur de passage (182) qui comprend des bornes supérieure et inférieure (186) et (187) et une borne intermédiaire (188), ce par quoi en, cas d'éjection du plateau à cassette (110), la partie d'extrémité frontale du levier de commutation (180) est mise en contact et appliquée par la broche de guidage (131) du support de cassette (130), la partie d'extrémité arrière du levier de commutation provoque la montée de la borne intermédiaire (188) de façon à ce que la borne supérieure (186) et la borne intermédiaire (188) soient amenées en contact, pendant le chargement, la borne intermédiaire (188) est séparée des bornes supérieure et inférieure (186) et (187), et, lorsque le chargement est terminé, ladite broche de guidage (131) appuie sur la borne intermédiaire (188) vers le bas de façon à l'amener en contact avec la borne inférieure (187).

5. Appareil de chargement de cassette pour un enregistreur de bande audio numérique selon la revendication 1, dans lequel :
- une saillie d'éjection de cassette (120) est formée d'un seul tenant sur la partie intermédiaire de la plaque support (115) dudit plateau à cassette (110), ce par quoi, en cas de déchargement du plateau à cassette (110), la broche de guidage (131) du support de cassette (130) est amenée vers la partie d'extrémité latérale droite de la première fente de guidage (101) des deux appliques latérales (105) et, ensuite, est arrêtée, après quoi le plateau à cassette (110) subit un changement de course provoquant la sortie de la cassette (70) du support de cassette (130).
